(19) Europäisches Patentamt
European Patent Office
Office européen des brevets

(11) **EP 4 395 158 B1**

(12) **EUROPEAN PATENT SPECIFICATION**

(45) Date of publication and mention
of the grant of the patent:
**08.07.2026 Bulletin 2026/28**

(21) Application number: **23212516.1**

(22) Date of filing: **28.11.2023**

(51) International Patent Classification (IPC):
*H02P 21/06* (2016.01)          *H02K 11/00* (2016.01)

(52) Cooperative Patent Classification (CPC):
**H02P 21/06**

(54) **DRIVER**

TREIBER

PILOTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.12.2022 JP 2022212403**

(43) Date of publication of application:
**03.07.2024 Bulletin 2024/27**

(73) Proprietor: **OMRON Corporation
Kyoto 600-8530 (JP)**

(72) Inventor: **KIRIBUCHI, Takeshi
Kyoto, 600-8530 (JP)**

(74) Representative: **Isarpatent
Patent- und Rechtsanwälte
Barth Hassa Peckmann & Partner mbB
Friedrichstraße 31
80801 München (DE)**

(56) References cited:
**WO-A1-2022/186199      US-A1- 2022 200 498
US-A1- 2024 154 461**

**Description**

TECHNICAL FIELD

The present invention relates to a driver.

BACKGROUND ART

For motors used to drive loads for various purposes, it is necessary to identify the state of the motor in order to accurately control the motor, and detection devices such as encoders are generally utilized to this end. To drive an encoder, power needs to be supplied. Generally, a servo system (a driver, for example) or the like and the encoder are connected by a cable, and the power is supplied through the cable. Alternatively, Patent Document 1 discloses a configuration in which the power is wirelessly supplied from outside to an encoder that performs wireless communication with the servo system side.

Further, Patent Document 2 discloses a configuration in which the power required for driving an external device such as an encoder is superimposed on the power for driving the motor, the power is temporarily supplied to the motor, and a portion of the supplied power is subsequently extracted in the motor and supplied to the external device. In this technique, the power to be supplied to the external device is superimposed by adjusting a d-axis current value of a drive current of the motor. In addition, Patent Document 3 discloses a motor drive device which can reduce or prevent a reduction in efficiency while performing the vibration suppression control in the overmodulation region.

Citation List

Patent Literature

Patent Document 1: JP 2001-297389 A
Patent Document 2: WO 2022/186200
Patent Document 3: US 2022/200498 A1

SUMMARY OF INVENTION

Technical Problem

Although the power consumed by the encoder attached to the motor is small compared with the power consumed by the motor, the encoder needs to constantly monitor the state of the motor driven, requiring a stable power supply. Power is generally supplied with the encoder and the driver of the motor being connected to each other with a cable. However, this requires wiring the cable of the encoder in addition to the power line of the motor, which may cause an increase in wiring workload, an increase in cost due to the cable, and the like.

Further, in modes of power supply to external devices such as encoders, it is necessary to consider the impact on the operating state of the motor (state defined by rotational speed, torque, and the like) when utilizing the d-axis current included in the drive current for driving the motor, as disclosed in the related art. In general, d-axis current is strongly correlated with the formation of magnetic fields for motor drive. Therefore, when the d-axis current value is determined with priority given to power supply to the external device, the desired motor drive may be hindered.

The present invention was made in view of such problems, and an object thereof is to provide a technique for realizing stable power supply to an external device related to a motor while suppressing impact on an operating state of the motor to the extent possible.

Solution to Problem

The invention is as defined in claim 1.

The motor may be a single-phase alternating current motor or may be a three-phase alternating current motor. The connection form of coils in a winding of the motor may be a so-called delta connection or may be a star connection (or a Y connection). Further, the coils of the winding may be wound around a stator of the motor by distributed winding or concentrated winding. That is, in the motor of the present invention, the specific formation of the winding is not intended to be particularly limited.

As long as the extraction unit is disposed at the winding of the motor and a power line connecting the motor and the driver so as to extract power, the specific form or configuration of the extraction unit is not limited to any particular form. For example, the extraction unit may be disposed at the winding of the motor and the power line so that a transformer structure is formed such that a portion of power being supplied to the winding and the power line is input to a primary coil thereof, and may be configured to extract the portion of power through the transformer structure. The transformer structure may be either a single-winding transformer or a multi-winding transformer. Note that, in the case of a single-winding transformer, the secondary coil refers to the coil in a section in which a part of the primary coil is shared by both the primary coil and the secondary coil.

Then, from the secondary coil of the transformer structure, an alternating current corresponding to an alternating current flowing through the primary coil and a turns ratio due to the transformer structure (a ratio of the number of turns in the secondary coil to the number of turns in the primary coil) are extracted. Then, the supply unit rectifies the extracted alternating current and supplies the rectified current to an external device. Note that the supply unit may transform the voltage after rectification into a voltage suitable for driving the external device, as necessary. Further, the supply unit can supply power to the external device more stably by storing the rectified power in a rechargeable battery.

Here, a portion of the power supplied from the driver to the motor or the power line by adjusting the d-axis current value of the drive current of the motor may be extracted by the extraction unit, and the extracted power may be supplied to the external device via the supply unit. However, while the d-axis current is basically a drive current that does not contribute (unlikely contributes) to the torque of the motor, the d-axis current flows through the winding of the motor and thus may change a magnetic field formed in the motor interior (in the stator, the rotor, or the like). As a result, the power supply to the external device may result in undesirable effects on the motor drive.

Therefore, in the driver described above, the determination unit determines, on the basis of the operating state of the motor, whether adjustment of the d-axis current value is necessary to supply the first power to the external device. Then, on the basis of the determination result, predetermined power including at least the drive power required for driving the motor and the first power is output by the output unit. Note that the output of the predetermined power by the output unit includes both power output through adjustment of the d-axis current value and power output without adjustment of the d-axis current value. Examples of a predetermined parameter representing the operating state of the motor include a rotational speed and a torque (drive current value) related to the power required for driving the motor. By determining whether adjustment of the d-axis current value for power supply is necessary on the basis of the operating state of the motor as described above, it is possible to avoid disturbance of the operating state of the motor caused by the power supply. Note that the external device may be an encoder attached to the motor, or may be a sensor device such as a temperature sensor or a vibration sensor disposed inside or outside the motor.

Further, in a case in which there is an adjustment margin of the d-axis current value from the viewpoint of the stability of the operation of the motor, the determination unit determines that adjustment of the d-axis current value is necessary, and the output unit outputs the predetermined power accordingly.

As an example of a method of varying the d-axis current value over time, the d-axis current value may be varied at a frequency higher than the electrical angular frequency corresponding to the rotational speed of the motor. Note that, as the transition of the d-axis current value varying over time, a sinusoidal waveform transition, a rectangular waveform transition, a triangular waveform transition, or the like can be employed.

Further, with a configuration including the power estimation unit, it is possible to accurately identify the power required for supplying power to the external device. This is extremely important in terms of adjustment of the d-axis current value which may impact the operating state of the motor, and suitably facilitates both stable operation of the motor and stable power supply to the external device in a compatible manner.

The invention is as defined in claim 2. When the operating state of the motor is affiliated with a region where the extracted power exceeds the predetermined threshold power, it can be generally said that the operating state is affiliated with a so-called high-speed high-torque region where the rotational speed of the motor is relatively high and the torque thereof is also relatively high. Therefore, based on a configuration in which the drive current to the motor flows into the extraction unit to extract power, in such a case, the power is supplied from the driver without adjustment of the d-axis current value, and the output unit outputs the predetermined power.

Here, with regard to the form in which adjustment of the d-axis current value is determined to be necessary, the invention is as defined in claim 3. The predetermined threshold is the rotational speed of the motor corresponding to an electrical angular frequency of the drive current at which the efficiency of power extraction by the extraction unit is relatively high. Accordingly, in a case in which the rotational speed of the motor is higher than the predetermined threshold value, the efficiency of power extraction by the extraction unit is expected to be relatively high, and thus control is preferably performed by a method in which the d-axis current value does not vary over time.

Advantageous Effects of Invention

It is possible to realize stable power supply to an external device related to a motor while suppressing impact on an operating state of the motor to the extent possible.

BRIEF DESCRIPTION OF DRAWINGS

FIG. 1 is a diagram illustrating a schematic configuration of a control system that drives and controls a motor.

FIG. 2 is a diagram illustrating a schematic configuration of the motor.

FIG. 3 is a first view schematically illustrating a winding of the motor and an arrangement of transformer structures provided with respect to the winding.

FIG. 4 is a diagram illustrating a correlation between a rotational speed of the motor and a torque exerted.

FIG. 5 is a flowchart illustrating a flow of power supply control to the motor by a driver.

FIG. 6 is a diagram illustrating a model circuit for estimating power extracted by the transformer structures in the power supply control.

FIGs. 7A and 7B are diagrams illustrating an increase mode of a d-axis current value for power supply.

FIG. 8 is a second view schematically illustrating the winding of the motor and the arrangement of the transformer structures provided with respect to the winding.

FIG. 9 is a third view schematically illustrating the winding of the motor and the arrangement of the transformer structures provided with respect to the winding.

FIG. 10 is a diagram illustrating a schematic configuration of the motor according to a modified example.

DESCRIPTION OF EMBODIMENTS

Embodiments

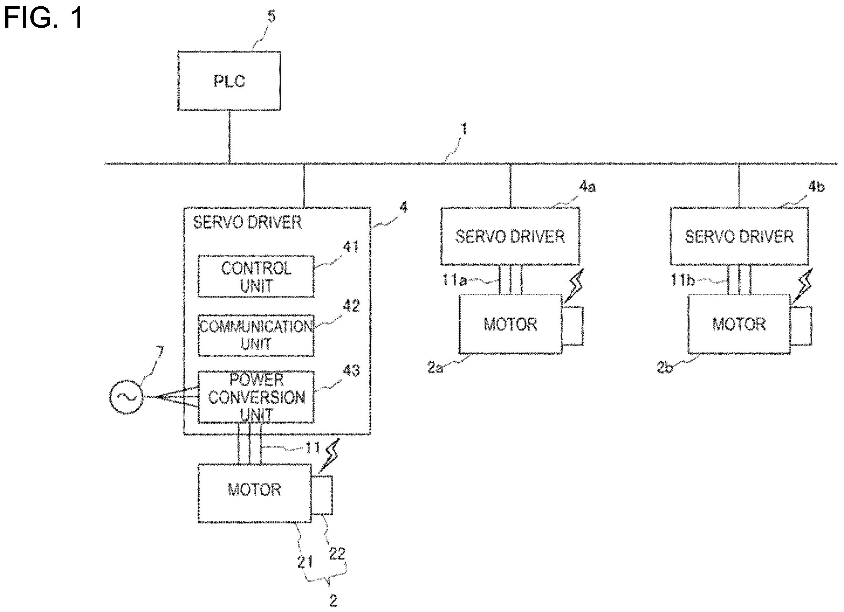

FIG. 1 is a diagram illustrating a schematic configuration of a control system that drives and controls a motor. First, the control system will be described. In the control system, a programmable logic controller (PLC) 5 is connected to a network 1 as a host controller. Then, a plurality of servo drivers (hereinafter referred to as "drivers") 4 are connected to the network 1 and configured to exchange signals with the PLC 5. Note that, although a functional configuration of one driver 4 is representatively illustrated in detail in FIG. 1, other drivers 4a, 4b also have the same functional configuration as that of the driver 4. A motor 2 is connected to the driver 4 by a power line 11 and supplied with drive power. Similarly, motors 2a, 2b are supplied with drive power from the drivers 4a, 4b via power lines 11a, 11b, respectively. Hereinafter, the structures of the motor and the driver will be described on the basis of the motor 2 and the driver 4 as representative examples.
To drive a predetermined load device, the motor 2 is driven and controlled according to commands from the PLC 5. As an example, various mechanical devices (arms of industrial robots or transfer equipment, for example) can be exemplified as the load device, and the motor 2 is incorporated into the device as an actuator that drives the load device. Further, the motor 2 is an alternating current (AC) servo motor. Alternatively, the motor 2 may be an induction motor or a direct current (DC) motor. The motor 2 includes a motor body 21 and an encoder 22. The motor body 21 includes a stator including a winding formed by winding coils around a stator core and a rotor in which a permanent magnet is incorporated. The encoder 22 includes a detection disk that rotates in conjunction with rotation of the rotor and can detect a rotation state of the rotor. The rotation detection by the encoder 22 may be by an incremental method or may be by an absolute method.
The detection signal from the encoder 22 is wirelessly transmitted to the driver 4 via a communication unit 42, described below, included in the driver 4. The transmitted detection signal is supplied to a control unit 41, similarly described below, included in the driver 4 for servo control by the control unit 41. The detection signal from the encoder 22 includes, for example, position information related to a rotational position (angle) of a rotating shaft of the motor 2, and information related to a rotational speed of the rotating shaft.
The driver 4 includes the control unit 41, the communication unit 42, and a power conversion unit 43. The control unit 41 is a functional unit that performs servo control of the motor 2 on the basis of commands from the PLC 5. The control unit 41 receives an operation command signal related to the operation (motion) of the motor 2 from the PLC 5 via the network 1 and a detection signal output from the encoder 22, and performs servo control related to the driving of the motor 2, that is, calculates a command value related to the operation of the motor 2. The control unit 41 executes feedback control and the like utilizing a position controller, a speed controller, and a current controller. Further, the control unit 41 is configured to manage controls performed by the driver 4 other than the servo control of the motor 2.

The communication unit 42 is a functional unit that manages wireless communication between the encoder 22 and the driver 4. When starting wireless communication, the communication unit 42 of the driver 4, by a process of identifying an encoder that is the target of communication, identifies the encoder 22 as the target of wireless communication. This does not cause crossed lines of communication so that the communication unit 42 does not perform wireless communication with the encoder of the motor 2a or the encoder of the motor 2b. Similarly, the encoder of the motor 2a and the encoder of the motor 2b perform wireless communication only with the drivers 4a, 4b, respectively. The power conversion unit 43 supplies drive power to the motor 2 via the power line 11 on the basis of the command value related to the operation of the motor 2 calculated by the control unit 41. Note that, to generate this supplied power, alternating current power supplied from an alternating current power source 7 to the driver 4 is utilized. In the present embodiment, the driver 4 is a type that receives three-phase alternating current, but may be a type that receives single-phase alternating current. Alternatively, the driver 4 may be a type that receives direct current.

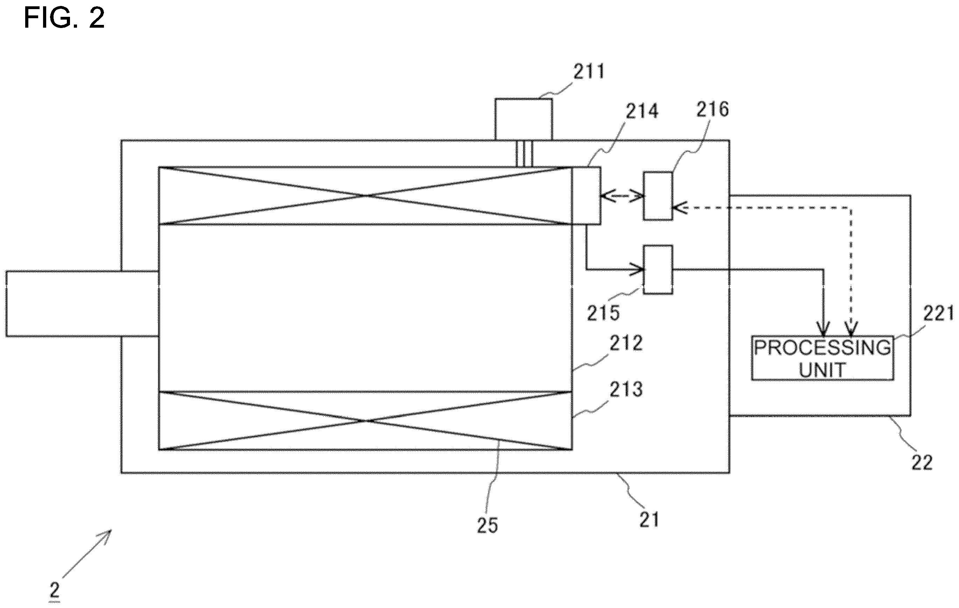

Next, a schematic configuration of the motor 2 will be described with reference to FIG. 2. The motor 2 is a three-phase (U-phase, V-phase, and W-phase) alternating current motor and includes the motor body 21 and the encoder 22. The motor body 21 includes a rotor 212 and a stator 213. The rotor 212 incorporates permanent magnets and is rotatably supported. In the stator 213, a coil is wound around a stator core formed of electromagnetic steel sheets, forming a winding 25. In the present embodiment, a connection form of each phase of the winding 25 is a Y connection, but may be a delta connection instead. Further, in the present embodiment, the coils may be wound around the stator core by either distributed winding or concentrated winding. The configuration illustrated in FIG. 2 is merely schematic, and the technical idea of the present invention can be applied regardless of the specific configuration of the motor.

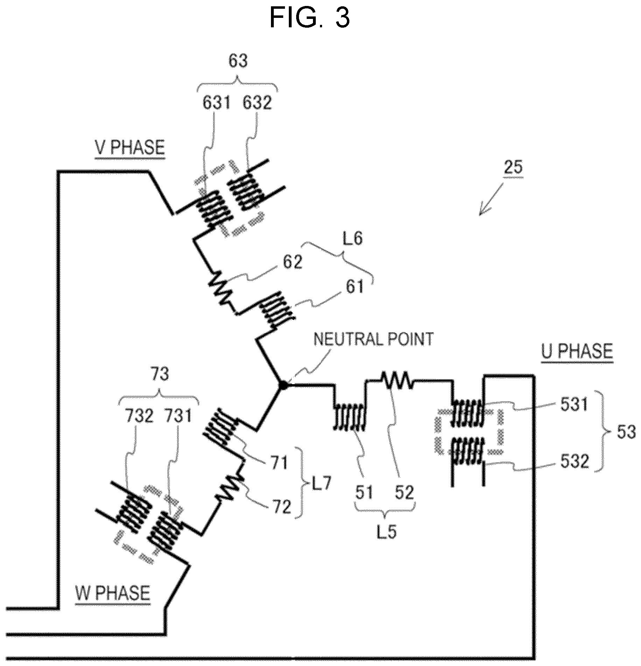

The power line 11 for supplying drive power from the driver 4 is connected to a connector 211. The connector 211 is connected to each phase of the winding 25. Then, in the motor 2, transformer structures (refer to 53, 63, 73 illustrated in FIG. 3; details described below) are disposed relative to the winding 25, and an extraction unit 214 is provided that utilizes the transformer structures to extract a portion of the drive power supplied to the coils of the winding 25 as power for the encoder. That is, the extraction unit 214 causes the alternating current flowing through the winding 25 of the motor body 21 to flow to the primary coil side of the transformer structures, thereby extracting current that can be utilized as the drive current of the encoder 22 on the secondary coil side.

The extraction unit 214 extracts the power based on the alternating current output from the secondary coil of the transformer structures as power for the encoder 22. Then, the power is rectified by a supply unit 215 and stepped up or down, as necessary, by a DC-DC converter included in the supply unit 215 to a direct current voltage suitable for driving the encoder 22. In a state in which the encoder 22 is attached to the motor body 21, the supply unit 215 forms an electrical connection to the encoder 22, facilitating supply of the direct current power to the encoder 22 side, in particular, to a processing unit 221 that performs detection processing of the rotation of the rotor 212. Further, the supply unit 215 may include a rechargeable battery that can store the direct current power after rectification. In this case, power can be supplied to the encoder 22 even in a period in which drive current is not flowing through the winding 25 or a period in which the drive current is extremely low.

Further, the motor 2 of the present embodiment is configured to utilize the extraction processing by the extraction unit 214 to facilitate the exchange of a predetermined signal between the winding 25 of the motor body 21 and the processing unit 221 of the encoder 22. The exchange of the predetermined signal is realized by a signal exchange unit 216 while utilizing the transformer structures described above. When the predetermined signal is transmitted from the winding 25 to the processing unit 221, a current on which the predetermined signal is superimposed is caused to flow through the coils of the winding 25 and flow through the primary coil side of the transformer structures, making it possible for the extraction unit 214 to generate a current corresponding to the predetermined signal on the secondary coil side of the transformer structures. Then, the signal exchange unit 216 transfers this extracted corresponding current to the processing unit 221. In this case, to accurately transmit information held by the predetermined signal, the signal exchange unit 216 does not perform rectification processing on the corresponding current extracted by the extraction unit 214. On the other hand, in a case in which the extracted corresponding current is weak, the signal exchange unit 216 may perform predetermined amplification processing.

Further, when a predetermined signal is transmitted from the processing unit 221 to the winding 25, a current including the predetermined signal is caused to flow to the secondary coil side of the transformer structures via the signal exchange unit 216, making it possible for the extraction unit 214 to generate a current corresponding to the predetermined signal on the primary coil side of the transformer structures and cause the current to flow to the coils of the winding 25. Note that, in this case as well, predetermined amplification processing may be performed on the predetermined signal by the signal exchange unit 216. The coils of the winding 25 are electrically connected to the driver 4 via the power line 11, making it possible to transmit the predetermined signal from the encoder 22 to the driver 4 via a current corresponding to the predetermined signal output from the processing unit 221. As described above, the encoder 22 and the driver 4 are configured to perform wireless communication with each other via the communication unit 42. However, the exchange of the predetermined signal via the signal exchange unit 216 is an effective communication form under certain conditions, such as before wireless communication is enabled.

Next, the winding 25 of the motor body 21 and the arrangement of the transformer structures provided with respect to the winding 25 will be described with reference to FIG. 3. The winding 25 includes winding portions L5, L6, L7 of the three phases of a U phase, a V phase, and a W phase, respectively. The winding portions of the phases are connected in a Y connection, and the section where the winding portions are connected corresponds to a neutral point. In FIG. 3, for the winding portion L5 of the U phase, the inductance component is denoted by 51, and the resistance component is denoted by 52. In a similar manner, for the winding portion L6 of the V phase, the inductance component is denoted by 61 and the resistance component is denoted by 62, and for the winding portion L7 of the W phase, the inductance component is also denoted by 71 and the resistance component is also denoted by 72.

The transformer structures that form the extraction unit 214 are arranged for each phase. Specifically, for the U phase, a primary coil 531 of the transformer structure 53 of the U phase is connected in series with the winding portion L5; for the V phase, a primary coil 631 of the transformer structure 63 of the V phase is connected in series with the winding portion L6; and for the W phase, a primary coil 731 of the transformer structure 73 of the W phase is connected in series with the winding portion L7. Further, a secondary coil 532 of the transformer structure 53 of the U phase, a secondary coil 632 of the transformer structure 63 of the V phase, and a secondary coil 732 of the transformer structure 73 of the W phase are connected to the supply unit 215. Furthermore, each of the secondary coils 532, 632, 732 is also connected to the signal exchange unit 216.

Note that the turns ratio (ratio of the number of turns in the secondary coil to the number of turns in the primary coil) is basically the same for the transformer structures of all the phases, but may be different. Also, in the mode illustrated in FIG. 3, the transformer structures are arranged for all three phases, with the secondary coils being connected to the supply unit 215 and the signal exchange unit 216. However, the transformer structure(s) may be arranged for only one or more of the three phases, with the secondary coils being connected to the supply unit 215 and the signal exchange unit 216. Alternatively, the transformer structures may be arranged for all three phases, the secondary coil(s) of one or more of the transformer structures may be connected to the supply unit 215, and the secondary coil(s) of the remaining transformer structure(s) may be connected to the signal exchange unit 216. In this case, the turns ratio of the transformer structure(s) connected to the supply unit 215 and responsible for supplying power to the encoder 22 and the turns ratio of the transformer structure(s) connected to the signal exchange unit 216 and responsible for exchanging the predetermined signal with the encoder 22 may be suitably set in accordance with each purpose.

By using the winding 25 and the transformer structures 53, 63, 73 thus configured, a portion of the power supplied to the motor 2 via the power line 11 can be extracted as drive power for the encoder 22 by the extraction unit 214. According to this configuration, when the motor 2 is running, power is constantly being stably supplied to the encoder 22, and thus cables to be wired to the encoder 22 are not necessary. This makes it possible to significantly reduce cable wiring work and reduce cost.

Here, a circuit equation of the motor 2 in a case in which a single-phase transformer is adopted as the transformer structure in the motor 2 of the mode illustrated in FIG. 3 will be examined. The characteristics of the transformer structure of each phase are the same. Note that, in the following equations, voltages Vu, Vv, Vw and currents Iu, Iv, Iw represent output voltages and currents of the respective phases of the driver 4, Lu, Lv, Lw represent self-inductances of the respective phases of the motor 2, and Muv, Mvw, Mwu represent mutual inductances between the phases of the motor 2. Further, ωe represents an electrical angular frequency, Φuvw represents an armature winding maximum interlinkage magnetic flux number, R represents a winding resistance, Ke represents an induced voltage constant, and s represents a differential operator. Further, voltages Vux2, Vvx2 Vwx2 and currents Iux2, Ivx2 Iwx2 represent voltages and currents output from the secondary side of the transformer structures, Lx1, Lx2, Mx represent the primary side inductance, the secondary side inductance, and the mutual inductance of the transformer structures, respectively, and Rx1, Rx2 represent the winding resistances of the primary side and the secondary side of the transformer structures. Furthermore, θe is an electrical angle.

The circuit equations of the motor 2 are expressed by the following Equation 1 and Equation 2.
Equation 1

$$
\begin{bmatrix} V_u \\ V_v \\ V_w \\ V_{ux2} \\ V_{vx2} \\ V_{wx2} \end{bmatrix} = Z_{uvw1} \begin{bmatrix} I_u \\ I_v \\ I_w \\ I_{ux2} \\ I_{vx2} \\ I_{wx2} \end{bmatrix} + \begin{bmatrix} -\omega_e \emptyset_{uvw} \sin(\theta_e) \\ -\omega_e \emptyset_{uvw} \sin(\theta_e - \frac{2}{3}\pi) \\ -\omega_e \emptyset_{uvw} \sin(\theta_e + \frac{2}{3}\pi) \\ 0 \\ 0 \\ 0 \end{bmatrix}
$$

(1)

Equation 2

$$
Z_{uvw1} =
$$

$$
\begin{bmatrix} R_{x1} + R + s(L_{x1} + L_u) & sM_{uv} & sM_{wu} & sM_x & 0 & 0 \\ sM_{uv} & R_{x1} + R + s(L_{x1} + L_v) & sM_{vw} & 0 & sM_x & 0 \\ sM_{wu} & sM_{vw} & R_{x1} + R + s(L_{x1} + L_w) & 0 & 0 & sM_x \\ sM_x & 0 & 0 & R_{x2} + sL_{x2} & 0 & 0 \\ 0 & sM_x & 0 & 0 & R_{x2} + sL_{x2} & 0 \\ 0 & 0 & sM_x & 0 & 0 & R_{x2} + sL_{x2} \end{bmatrix}
$$

(2)

Furthermore, by performing conversion processing from the three UVW phases to the two dq phases and conversion processing from the fixed coordinate system to the rotating coordinate system, circuit equations represented by the following Equation 3 and Equation 4 are obtained.
Equation 3

$$
\begin{bmatrix} V_d \\ V_q \\ V_{dx2} \\ V_{qx2} \end{bmatrix} = Z_{dq1} \begin{bmatrix} I_d \\ I_q \\ I_{dx2} \\ I_{qx2} \end{bmatrix} + \begin{bmatrix} 0 \\ \omega_e K_e \\ 0 \\ 0 \end{bmatrix}
$$

(3)

Equation 4

$$Z_{dq1} =$$

$$\begin{bmatrix} R_{x1} + R + s(L_{x1} + L_d) & -\omega_e(L_{x1} + L_q) & sM_x & -\omega_e M_x \\ \omega_e(L_{x1} + L_d) & R_{x1} + R + s(L_{x1} + L_q) & \omega_e M_x & sM_x \\ sM_x & -\omega_e M_x & R_{x2} + sL_{x2} & -\omega_e L_{x2} \\ \omega_e M_x & sM_x & \omega_e L_{x2} & R_{x2} + sL_{x2} \end{bmatrix}$$

(4)

Furthermore, secondary side power Pdqx of the transformer structures is expressed by the following Equation 5. A d-axis current idx2 and a q-axis current iqx2 on the secondary side of the transformer structures are represented by the following Equation 6. Note that, in the following equations, RL represents a load resistance of the external device (encoder 22) to which power is supplied via the transformer structures forming the extraction unit 214.
Equation 5

$$P_{dqx} = \begin{bmatrix} i_{dx2} \\ i_{qx2} \end{bmatrix}^T \cdot \begin{bmatrix} i_{dx2} \\ i_{qx2} \end{bmatrix} \cdot R_L$$

(5)

Equation 6

$$\begin{bmatrix} i_{dx2} \\ i_{qx2} \end{bmatrix} = \begin{bmatrix} sL_{x2} + R_{x2} + R_L & -\omega_e L_{x2} \\ \omega_e L_{x2} & sL_{x2} + R_{x2} + R_L \end{bmatrix}^{-1} \cdot \left( -\begin{bmatrix} sM_x & -\omega_e M_x \\ \omega_e M_x & sM_x \end{bmatrix} \cdot \begin{bmatrix} i_d \\ i_q \end{bmatrix} \right)$$

(6)

Then, on the basis of Equations 5 and 6, power Pdqt having steady characteristics on the secondary side of the transformer structures is expressed by the following Equation 7.
Equation 7

$$P_{dqt} = \frac{\omega_e^2 M_x^2 R_L \left( i_d^2 + i_q^2 \right)}{R_{x2}^2 + 2R_L R_{x2} + R_L^2 + \omega_e^2 L_{x2}^2}$$

(7)

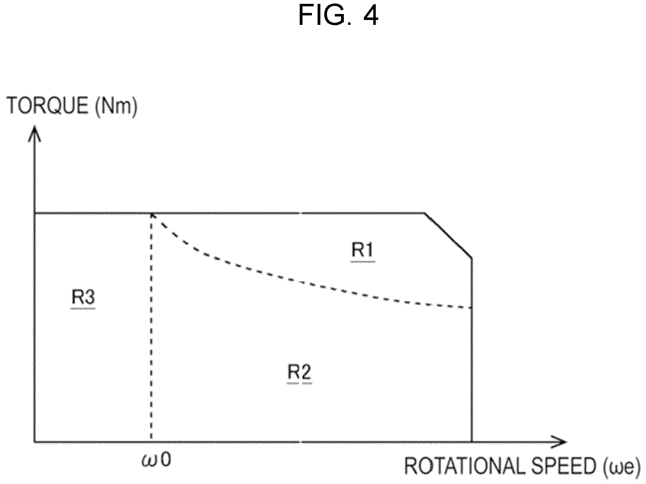

As can be understood from Equation 7, the power extracted by the transformer structures is determined by the d-axis current id and the q-axis current iq supplied from the driver 4 to the motor 2 via the power line 11, and the electrical angular frequency ωe related to the rotational speed of the motor. On the other hand, the d-axis current id and the q-axis current iq need to be supplied in order to bring the motor 2 into a desired operating state, that is, a state in which a desired torque is produced at a desired rotational speed. However, if the d-axis current id and the q-axis current iq are determined with priority given to extracting power by the transformer structures, the stability of the operating state of the motor may be affected, which is not preferable.
Therefore, in the present embodiment, as shown in FIG. 4, the method of determining the motor drive current for power extraction by the transformer structures, that is, for power supply to the encoder 22, is switched in accordance with a region with which the operating state of the motor 2 is affiliated. Note that the q-axis current iq is a drive current that directly affects the torque exerted by the motor 2, and thus adjustment of the q-axis current iq for the purpose of power extraction by the transformer structures significantly affects the operating state of the motor 2 and is not preferable. Therefore, when power extraction by the transformer structures is intended, the d-axis current id is adjusted.

First, region R1 will be described. The region R1 is a so-called high-speed high-torque region. In general, as the rotational speed of the motor 2 increases, the voltage output of the driver is saturated due to the induced voltage, making stable rotation unlikely. In such a case, it is necessary to appropriately set the d-axis current in order to promote smooth rotation of the motor. Therefore, when the operating state of the motor 2 is affiliated with the region R1, power is supplied from the driver 4 without adjusting the d-axis current id for supplying power to the encoder 22 via the transformer structures (the d-axis current id is distinguished from the d-axis current required for the original driving of the motor, and refers to the d-axis current additionally superimposed on the d-axis current required for the original driving). On the basis of the above, the region R1 is set as a region in which Pdqt expressed by Equation 7 is larger than a predetermined threshold power.

Accordingly, to supply power to the encoder 22 via the transformer structures in a region other than the region R1, it is necessary to adjust the d-axis current id for the supply thereof. Thus, the region excluding the region R1 is divided into a region R2 in which the rotational speed of the motor 2 is higher than a threshold speed $\omega 0$ and a region R3 in which the rotational speed of the motor 2 is equal to or lower than the threshold speed $\omega 0$. The threshold speed $\omega 0$ is related to the power extraction efficiency of the transformer structures. When the rotational speed of the motor 2 is higher than the threshold speed $\omega 0$, the power extraction efficiency of the transformer structures is relatively high, and when the rotational speed of the motor 2 is equal to or lower than the threshold speed $\omega 0$, the power extraction efficiency of the transformer structures is relatively low. Therefore, with the threshold speed $\omega 0$ set as a boundary condition, the adjustment mode of the d-axis current id for power supply to the encoder 22 via the transformer structures is different for the region R2 and the region R3.

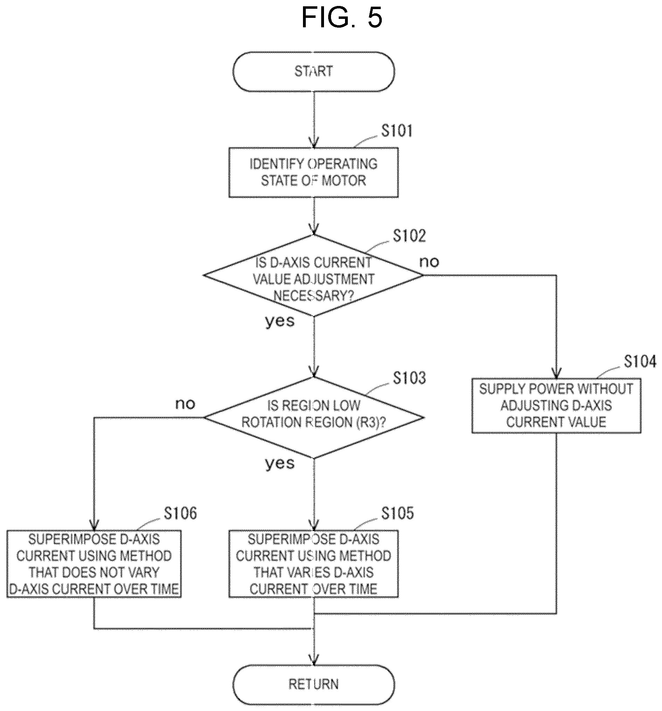

Next, control related to power supply to the encoder 22 via the transformer structures according to each region shown in FIG. 4 will be described with reference to FIG. 5. The power supply control illustrated in FIG. 5 is control related to power supply to the motor 2, which is repeatedly executed by the control unit 41 of the driver 4. Note that power supply to the motor 2 is realized by utilizing known vector control, and thus a detailed description of such vector control will be omitted.

First, in S101, the operating state (operation point) of the motor 2 is identified. Specifically, the rotational speed and the torque of the motor 2 are identified on the basis of FIG. 4. Subsequently, in S102, whether adjustment of the d-axis current value is necessary to supply power to the encoder 22 is determined on the basis of the operating state identified in S101. That is, in a case in which the operating state of the motor 2 is affiliated with the region R1 shown in FIG. 4, it is determined that adjustment of the d-axis current value is not necessary (that is, a negative determination is made), and the processing proceeds to S104. On the other hand, in a case in which the operating state of the motor 2 is not affiliated with the region R1 shown in FIG. 4, it is determined that adjustment of the d-axis current value is necessary (that is, an affirmative determination is made), and the processing proceeds to S103.

In S104, power is supplied to the encoder 22 without adjusting the d-axis current value. That is, when the operating state of the motor 2 is affiliated with the region R1, Pdqt expressed by Equation 7 is larger than the predetermined threshold power. Therefore, even if the d-axis current value is not adjusted, a certain amount of power can be extracted by the transformer structures as the motor 2 operates. As a result, continuous power supply to the encoder 22 is realized, and the operating state of the motor 2 is stably maintained.

Here, when an affirmative determination is made in S102 and the processing proceeds to S103, whether the operating state of the motor 2 is affiliated with R3, which is the low rotation region, is determined in S103. Specifically, in a case in which the rotational speed of the motor 2 is equal to or lower than the threshold speed $\omega 0$ shown in FIG. 4, an affirmative determination is made in S103, and in a case in which the rotational speed of the motor 2 is higher than the threshold speed $\omega 0$, a negative determination is made in S103. When an affirmative determination is made in S103, the processing proceeds to S105. When a negative determination is made in S103, the processing proceeds to S106.

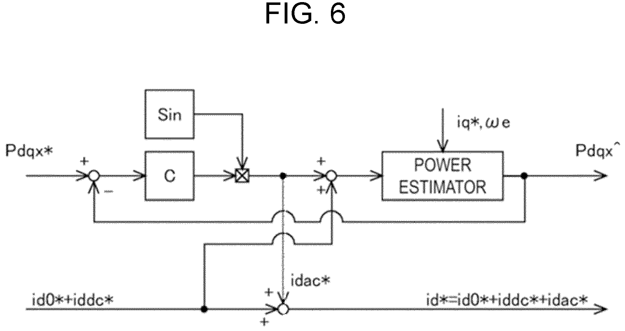

Here, in a case in which the rotational speed of the motor 2 is low, the efficiency of power extraction by the transformer structures is low, making the power actually extracted by the transformer structures unstable. On the other hand, due to the structure, size, and other restrictions of the motor 2, it is not easy to arrange, on the secondary side of the transformer structures, a sensor, or the like for accurately detecting the power extracted by the transformer structures for adjustment of the d-axis current. Therefore, in the present embodiment, a power estimation model illustrated in FIG. 6 is employed in the adjustment of the d-axis current value. This power estimation model is included in the control unit 41. The configuration for estimating the power extracted by the transformer structures using the power estimation model corresponds to the power estimation unit of the present invention. By adopting such a configuration, it is possible to suitably perform power supply through adjustment of the d-axis current without using a sensor for power detection.

The upper part of FIG. 6 illustrates a block diagram in which an estimated power value Pdqx^ is generated through adjustment of the d-axis current value when the power expected to be extracted by the transformer structures is a desired power Pdqx*. In this block diagram, to obtain the desired power Pdqx*, the estimated power value Pdqx^ is fed back and the difference is added to a controller to calculate a component idac* of the d-axis current value that varies over time. Then, the idac*, a component iddc* of the d-axis current value that does not vary over time, a q-axis current iq*, and an electrical angle frequency ωe related to the rotational speed of the motor 2 are input to a power estimator, and the estimated power value Pdqx^ is obtained. That is, the parameters related to the drive current (iq*, iddc*, idac*) and the parameter related to the rotational speed (we) of the motor 2 are input to the power estimator. Then, Equation 5 is applied to the power estimator. Further, as illustrated in the lower part of FIG. 6, a d-axis current value id* is obtained by combining the component idac* that varies over time and the component iddc* that does not vary over time. Note that, in FIG. 6, an initial value id0* is included together with the component iddc* that does not vary over time, but the initial value id0* may be generally considered to be 0.

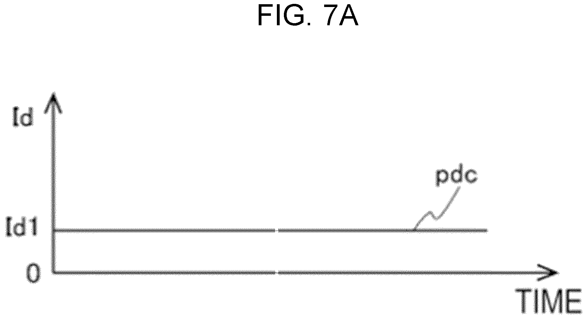

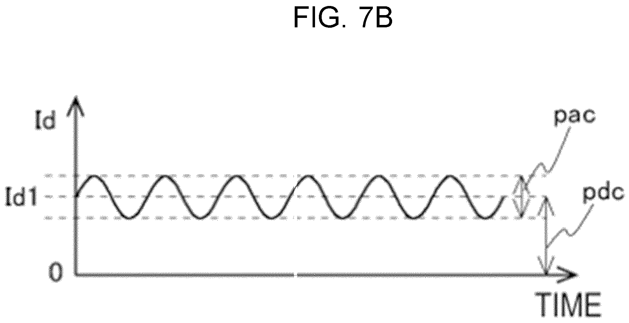

Here, the component of the d-axis current value that varies over time and the component of the d-axis current value that does not vary over time will be described with reference to FIGs. 7A and 7B. The d-axis current shown in FIG. 7A does not vary over time and has a constant value. Such a d-axis current includes only a component that does not vary over time (a component referred to as pdc in the drawing) and does not include a component that varies over time. On the other hand, the d-axis current shown in FIG. 7B varies over time in a state in which a constant bias is applied. Such a d-axis current includes a component that varies over time (a component referred to as pac in the drawing) in addition to the component that does not vary over time (the component referred to as pdc in the drawing).

Now, back to FIG. 5. In S105, which is performed when the operating state of motor 2 is affiliated with the region R3, the power estimation model illustrated in FIG. 6 is used to adjust the d-axis current value by a method that varies the d-axis current value over time, as shown in FIG. 7B. That is, the power to be supplied to the encoder 22 is superimposed on the drive current of the motor through adjustment of the d-axis current value. In such a mode, in a state in which a bias by the component that does not vary over time is added, the d-axis current value after adjustment becomes a value that varies over time with a constant amplitude and a constant frequency. By varying the d-axis current value over time in this way, it is possible to compensate for the decrease in the efficiency of power extraction caused by the transformer structures and, by including a component that does not vary over time, it is possible to increase the power supply amount per unit time and achieve a more efficient power supply.

Further, in S106 performed when the operating state of the motor 2 is affiliated with the region R2, the d-axis current value is adjusted using the power estimation model illustrated in FIG. 6 by a method that does not vary the d-axis current value over time, as shown in FIG. 7A. That is, the power to be supplied to the encoder 22 is superimposed on the drive current of the motor through adjustment of the d-axis current value. With the rotational speed of the motor 2 being relatively high in the region R2, the efficiency of power extraction by the transformer structures can be relatively maintained. Therefore, by defining the d-axis current with a component that does not vary over time, it is possible to increase the power supply amount per unit time and achieve a more efficient power supply. Note that, as described above, in the case of the region R2, because the rotational speed of the motor 2 is relatively high, stable power extraction by the transformer structures is relatively easy. Therefore, instead of using the power estimation model illustrated in FIG. 6, the d-axis current value for power supply may be determined according to the following Equation 8 derived from Equation 7 described above.

Equation 8

$$i_d = \sqrt{P_{dqt} \frac{R_{x2}^2 + 2R_L R_{x2} + R_L^2 + \omega_e^2 L_{x2}^2}{\omega_e^2 M_x^2 R_L} - i_q^2}$$

(8)

As described above, according to the power supply control illustrated in FIG. 5, it is possible to realize stable power supply to the encoder 22 while suppressing impact on the operating state of the motor 2 to the extent possible.

Modified Example

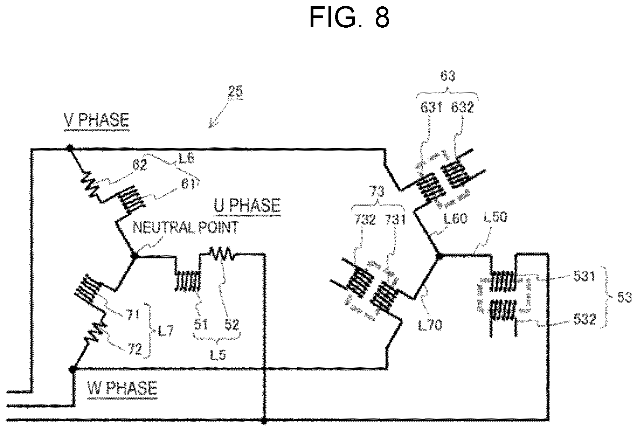

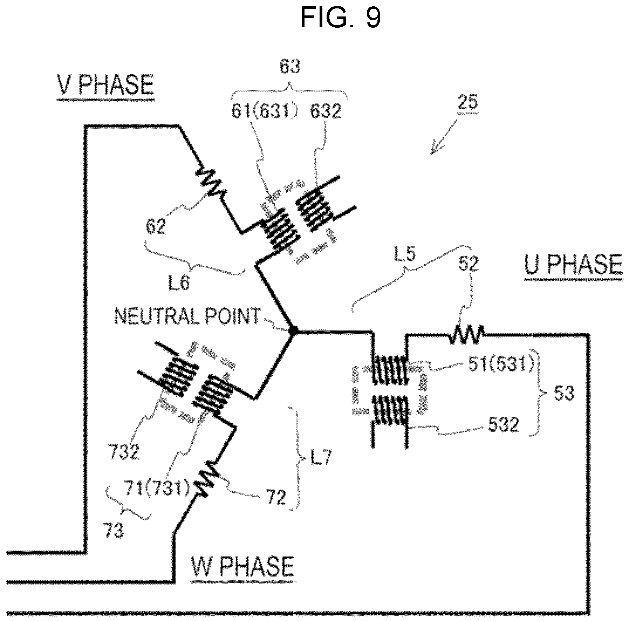

A modified example of the transformer structures forming the extraction unit 214 will now be described with reference to FIGS. 8 and 9. First, a first embodiment of the modified example will be described with reference to FIG. 8. The configuration of the winding 25 of the motor body 21 is the same as that of the embodiment illustrated in FIG. 3, and thus a detailed description thereof will be omitted. In the present mode, the primary coil 531 of the transformer structure 53 corresponding to the U phase, the primary coil 631 of the transformer structure 63 corresponding to the V phase, and the primary coil 731 of the transformer structure 73 corresponding to the W phase are connected in parallel with the respective winding portions L5, L6, L7 of the three phases. Specifically, a line L50 including the primary coil 531, a line L60 including the primary coil 631, and a line L70 including the primary coil 731 are Y-connected, and the other ends thereof are connected to the winding portion L5 of the U phase, the winding portion L6 of the V phase, and the winding portion L7 of the W phase, respectively. Further, the secondary coil 532 of the transformer structure 53, the secondary coil 632 of the transformer structure 63 of the V phase, and the secondary coil 732 of the transformer structure 73 of the W phase are connected to the supply unit 215. Furthermore, each of the secondary coils 532, 632, 732 is also connected to the signal exchange unit 216.

Note that, in the present mode as well, the turns ratios of the transformer structures of respective phases are basically the same, but may be different. Also, in the mode illustrated in FIG. 8, the transformer structures corresponding to all three phases are arranged with the secondary coils being connected to the supply unit 215 and the signal exchange unit 216. However, transformer structures may be arranged so as to correspond to only one or more of the three phases, with the secondary coils being connected to the supply unit 215 and the signal exchange unit 216. Alternatively, the transformer structures corresponding to all three phases may be arranged with the secondary coil(s) of one or more of the transformer structures connected to the supply unit 215, and the secondary coil(s) of the remaining transformer structure(s) may be connected to the signal exchange unit 216. In this case, the turns ratio of the transformer structure(s) connected to the supply unit 215 and responsible for supplying power to the encoder 22 and the turns ratio of the transformer structure(s) connected to the signal exchange unit 216 and responsible for exchanging the predetermined signal with the encoder 22 may be suitably set in accordance with each purpose.

By using the winding 25 and the transformer structures 53, 63, 73 thus configured, a portion of the power supplied to the motor 2 via the power line 11 can be extracted as drive power for the encoder 22 by the extraction unit 214. According to this configuration, when the motor 2 is running, power is constantly being stably supplied to the encoder 22, and thus cables to be wired to the encoder 22 are not necessary. This makes it possible to significantly reduce cable wiring work and reduce cost.

Next, a second embodiment of the modified example will be described with reference to FIG. 9. The configuration of the winding 25 of the motor body 21 is the same as that of the embodiment described above, and thus a detailed description thereof will be omitted. However, in the present mode, coil components 51, 61, 71 of the winding portions L5, L6, L7 of the respective phases are utilized as the primary coils 531, 631, 731 of the transformer structures 53, 63, 73 corresponding to the respective phases. Specifically, in the U-phase, the transformer structure 53 is formed with the coil component 51 serving as the primary coil 531; in the V-phase, the transformer structure 63 is formed with the coil component 61 serving as the primary coil 631; and in the W-phase, the transformer structure 73 is formed with the coil component 71 serving as the primary coil 731. Accordingly, in a third embodiment, the secondary coils 532, 632, 732 of the transformer structures 53, 63, 73 of the respective phases are wound around the stator core together with the main coil of the winding, which is also the primary coil, thereby forming the transformer structures 53, 63, 73 of the respective phases. Further, the secondary coil 532 of the transformer structure 53, the secondary coil 632 of the transformer structure 63 of the V phase, and the secondary coil 732 of the transformer structure 73 of the W phase are connected to the supply unit 215. Furthermore, each of the secondary coils 532, 632, 732 is also connected to the signal exchange unit 216.

Note that, in the present mode as well, the turns ratios of the transformer structures of respective phases are basically the same, but may be different. Also, in the mode illustrated in FIG. 9, the transformer structures corresponding to all three phases are arranged with the secondary coils being connected to the supply unit 215 and the signal exchange unit 216. However, the transformer structure(s) may be arranged so as to correspond to only one or more of the three phases, with the secondary coil(s) being connected to the supply unit 215 and the signal exchange unit 216. Alternatively, the transformer structures corresponding to all three phases may be arranged with the secondary coil(s) of one or more of the transformer structures connected to the supply unit 215, and the secondary coil(s) of the remaining transformer structure(s) may be connected to the signal exchange unit 216. In this case, the turns ratio of the transformer structure(s) connected to the supply unit 215 and responsible for supplying power to the encoder 22 and the turns ratio of the transformer structure(s) connected to the signal exchange unit 216 and responsible for exchanging the predetermined signal with the encoder 22 may be suitably set in accordance with each purpose.

By using the winding 25 and the transformer structures 53, 63, 73 thus configured, a portion of the power supplied to the motor 2 via the power line 11 can be extracted as drive power for the encoder 22 by the extraction unit 214. According to this configuration, when the motor 2 is running, power is constantly being stably supplied to the encoder 22, and thus cables to be wired to the encoder 22 are not necessary. This makes it possible to significantly reduce cable wiring work and reduce cost.

Furthermore, although the transformer structures 53, 63, 73 illustrated in FIGS. 3, 8, and 9 are multi-winding transformer structures, a single-winding transformer structure may be employed as a modified example thereof. For example, when a single-winding transformer structure is employed in the mode illustrated in FIG. 9, the transformer structures 53, 63, 73 are formed by using the winding 25 of the motor 2 as the primary coil and using a part of the winding 25 as the secondary coil. That is, the secondary coil portion of the winding 25 is shared by the primary side and the secondary side.

Modified Example Related to Device Supplied with Extracted Power

In the embodiments described above, the power extracted by the extraction unit 214 is supplied to the encoder 22, but the extracted power can also be supplied to a device other than the encoder 22. For example, the power may be supplied to a sensor device (for example, a temperature sensor or a vibration sensor) disposed inside or outside the motor 2. In this case, a port suitable for power supply and serving as a connection port of a cable with the sensor may be provided in the motor body 21.

Modified Example Related to Power Extraction

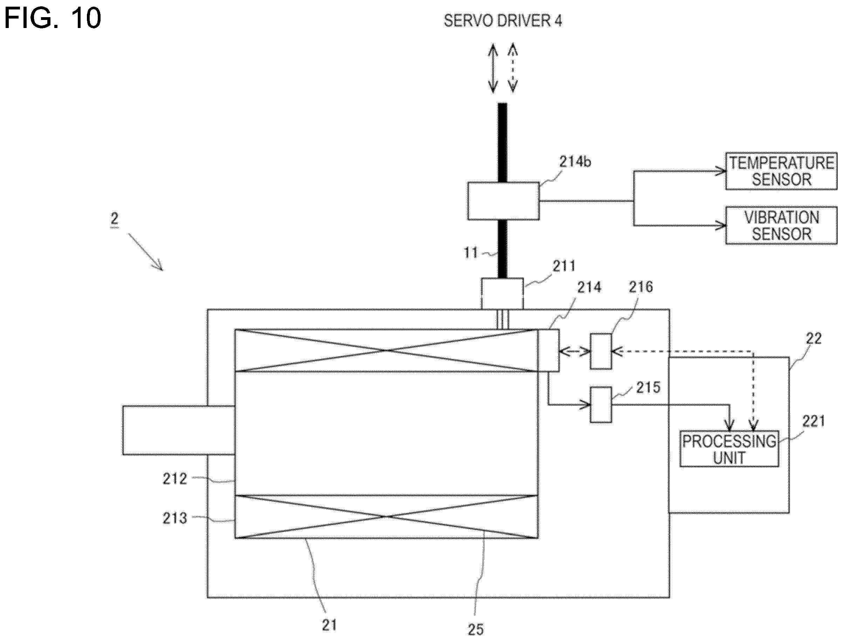

A modified example will be described with reference to FIG. 10. FIG. 10 is a diagram illustrating a schematic configuration of the motor 2 related to the present modified example. Note that the motor 2 of the present mode is provided with the extraction unit 214 having transformer structures with respect to the winding 25, as in the mode illustrated in FIG. 2. The transformer structures of the extraction unit 214 may be substantially the same as the structures illustrated in FIGS. 3, 8 and 9. Furthermore, in the present modified example, an extraction unit 214b that can realize power extraction is also provided at the power line 11 connected to the connector 211. Power extraction by the extraction unit 214b is also realized by incorporating transformer structures, which is electrically the same as the transformer structures illustrated in FIG. 3 and the like, into the power line 11.

The power extracted by the extraction unit 214b is subjected to predetermined rectification processing and the like, and can be supplied as power for a device such as a temperature sensor or a vibration sensor disposed outside the motor 2. Further, by storing the extracted power in a rechargeable battery, stable power can by supplied to the temperature sensor or the like. Note that, in the motor 2 illustrated in FIG. 10, the power extracted by the extraction unit 214 is supplied to the encoder 22. However, the power extracted by the extraction unit 214b may be supplied to the encoder 22, or the power extracted by both the extraction units 214, 214b may be supplied to the encoder 22. In addition, in the motor 2, the extraction unit 214 need not be provided, and the encoder 22 may receive power supply from a built-in battery or may receive power supply from the driver 4.

As described above, in the motor 2 of the present disclosure, it is possible to extract power not only from the winding 25, but also from the power line 11, and supply the power to the encoder 22, an external sensor, or the like, making it possible to significantly reduce a wiring load for power supply in a servo system.

**Claims**

1.   A driver (4) configured to supply drive power to

a motor (2) including
an extraction unit (214) configured to extract a portion of power supplied from outside, and
a supply unit (215) configured to supply the power extracted by the extraction unit (214) to an external device, or to
a motor power line (11) including the extraction unit (214) and the supply unit (215),
the driver (4) comprising:

a determination unit configured to determine, on the basis of an operating state of the motor (2), whether adjustment of a d-axis current value of a drive current of the motor (2) is necessary to supply first power to the external device via the extraction unit (214);
an output unit configured to output, on the basis of a determination result by the determination unit, predetermined power including drive power required for driving the motor (2) and the first power to the extraction unit (214); and
a power estimation unit configured to estimate power extracted by the extraction unit (214) on the basis of the drive current and the rotational speed of the motor (2), wherein
when the operating state of the motor (2) is affiliated with a region where extracted power extracted by the extraction unit (214) does not exceed a predetermined threshold power, the extracted power being calculated on the basis of the drive current and a rotational speed of the motor (2),
the determination unit determines that adjustment of the d-axis current value is necessary to supply the first power, and
the output unit outputs the predetermined power by superimposing an additional d-axis current on a d-axis current corresponding to the drive power required for driving the motor (2), wherein
further, when the rotational speed of the motor (2) is equal to or less than a predetermined threshold value, the output unit outputs the predetermined power by superimposing the additional d-axis current on the d-axis current corresponding to the drive power required for driving the motor (2) by a method that varies the d-axis current value over time, **characterized in that**
the output unit generates the additional d-axis current on the basis of the extracted power estimated by the power estimation unit and superimposes the additional d-axis current on the drive power required for driving the motor (2).

2. The driver (4) according to claim 1, wherein

when the operating state of the motor (2) is affiliated with a region where extracted power extracted by the extraction unit (214) exceeds a predetermined threshold power, the extracted power being calculated on the basis of the drive current and a rotational speed of the motor (2),
the determination unit determines that adjustment of the d-axis current value is not necessary to supply the first power, and
the output unit outputs the predetermined power without adjusting a d-axis current corresponding to the drive power required for driving the motor (2).

3. The driver (4) according to claim 1, wherein
further, when the rotational speed of the motor (2) is higher than a predetermined threshold value, the output unit outputs the predetermined power by superimposing the additional d-axis current on the d-axis current corresponding to the drive power required for driving the motor (2) by a method that does not vary the d-axis current value over time.

**Patentansprüche**

1. Antrieb (4), dazu eingerichtet, Antriebsleistung bereitzustellen an
einen Motor (2), der aufweist:

eine Entnahmeeinheit (214), die dazu eingerichtet ist, einen Teil einer von außen zugeführten Leistung zu entnehmen, und
eine Zufuhreinheit (215), die dazu eingerichtet ist, die durch die Entnahmeeinheit (214) entnommene Leistung einer externen Vorrichtung zuzuführen, oder an
eine Antriebsleistungsleitung (11), die die Entnahmeeinheit (214) und die Zufuhreinheit (215) aufweist,
wobei der Antrieb (4) umfasst:

eine Bestimmungseinheit, die dazu eingerichtet ist, auf der Grundlage eines Betriebszustands des Motors (2) zu bestimmen, ob eine Anpassung eines d-Achsen-Stromwertes eines Antriebsstroms des Motors (2) erforderlich ist, um der externen Vorrichtung eine erste Leistung über die Entnahmeeinheit (214) zuzuführen;
eine Ausgabeeinheit, die dazu eingerichtet ist, auf der Grundlage eines Bestimmungsergebnisses der Bestimmungseinheit eine zuvor festgelegte Leistung, einschließlich einer zum Antreiben des Motors (2) erforderlichen Antriebsleistung und der ersten Leistung, an die Entnahmeeinheit (214) auszugeben; und
eine Leistungsschätzeinheit, die dazu eingerichtet ist, die durch die Entnahmeeinheit (214) entnommene Leistung auf der Grundlage des Antriebsstroms und der Drehzahl des Motors (2) zu schätzen, wobei,
wenn der Betriebszustand des Motors (2) zu einer Region gehört, in der die durch die Entnahmeeinheit (214) entnommene Leistung eine zuvor festgelegte Schwellenleistung nicht überschreitet, wobei die entnommene Leistung auf der Grundlage des Antriebsstroms und einer Drehzahl des Motors (2) berechnet wird,
die Bestimmungseinheit bestimmt, dass eine Anpassung des d-Achsen-Stromwertes erforderlich ist, um die erste Leistung bereitzustellen, und
die Ausgabeeinheit die zuvor festgelegte Leistung ausgibt, indem sie einen zusätzlichen d-Achsen-Strom über einen d-Achsen-Strom legt, welcher der zum Antreiben des Motors (2) erforderlichen Antriebsleistung entspricht, wobei
des Weiteren, wenn die Drehzahl des Motors (2) gleich oder kleiner als ein zuvor festgelegter Schwellenwert ist, die Ausgabeeinheit die zuvor festgelegte Leistung ausgibt, indem sie - unter Verwendung eines Verfahrens, das den d-Achsen-Stromwert im Lauf der Zeit ändert - den zusätzlichen d-Achsen-Strom über den d-Achsen-Strom legt, welcher der zum Antreiben des Motors (2) erforderlichen Antriebsleistung entspricht, **dadurch gekennzeichnet, dass**
die Ausgabeeinheit den zusätzlichen d-Achsen-Strom auf der Grundlage der durch die Leistungsschätzeinheit geschätzten entnommenen Leistung generiert und den zusätzlichen d-Achsen-Strom über den zum Antreiben des Motors (2) erforderlichen Antriebsstrom legt.

EP 4 395 158 B1

**2.** Antrieb (4) nach Anspruch 1, wobei,

wenn der Betriebszustand des Motors (2) zu einer Region gehört, in der die durch die Entnahmeeinheit (214) entnommene Leistung eine zuvor festgelegte Schwellenleistung überschreitet, wobei die entnommene Leistung auf der Grundlage des Antriebsstroms und einer Drehzahl des Motors (2) berechnet wird, die Bestimmungseinheit bestimmt, dass eine Anpassung des d-Achsen-Stromwertes nicht erforderlich ist, um die erste Leistung bereitzustellen, und die Ausgabeeinheit die zuvor festgelegte Leistung ausgibt, ohne einen d-Achsen-Strom, welcher der zum Antreiben des Motors (2) erforderlichen Antriebsleistung entspricht, anzupassen.

**3.** Antrieb (4) nach Anspruch 1, wobei des Weiteren, wenn die Drehzahl des Motors (2) höher als ein zuvor festgelegter Schwellenwert ist, die Ausgabeeinheit die zuvor festgelegte Leistung ausgibt, indem sie - unter Verwendung eines Verfahrens, das nicht den d-Achsen-Stromwert im Lauf der Zeit ändert - den zusätzlichen d-Achsen-Strom über den d-Achsen-Strom legt, welcher der zum Antreiben des Motors (2) erforderlichen Antriebsleistung entspricht.


**Revendications**

**1.** Entraînement (4) configuré pour fournir une puissance d'entraînement à

un moteur (2) comportant
une unité d'extraction (214) configurée pour extraire une partie de la puissance fournie depuis l'extérieur, et
une unité d'alimentation (215) configurée pour alimenter la puissance extraite par l'unité d'extraction (214) à un dispositif externe, ou à
une ligne de puissance d'entraînement (11) comportant l'unité d'extraction (214) et l'unité d'alimentation (215), l'entraînement (4) comprenant :

une unité de détermination configurée pour déterminer, sur la base d'un état de fonctionnement du moteur (2), lorsqu'un ajustement d'une valeur de courant d'axe d d'un courant d'entraînement du moteur (2) est nécessaire pour alimenter une première puissance au dispositif externe via l'unité d'extraction (214) ;
une unité de sortie configurée pour délivrer, sur la base d'un résultat de détermination par l'unité de détermination, une puissance prédéterminée incluant la puissance d'entraînement requise pour entraîner le moteur (2) et la première puissance à l'unité d'extraction (214) ; et
une unité d'estimation de puissance configurée pour estimer la puissance extraite par l'unité d'extraction (214) sur la base du courant d'entraînement et de la vitesse de rotation du moteur (2), dans lequel
lorsque l'état de fonctionnement du moteur (2) se situe dans une plage où la puissance extraite par l'unité d'extraction (214) ne dépasse pas une puissance seuil prédéterminée, la puissance extraite étant calculée sur la base du courant d'entraînement et de la vitesse de rotation du moteur (2),
l'unité de détermination détermine qu'un ajustement de la valeur du courant d'axe d est nécessaire pour fournir la première puissance, et
l'unité de sortie délivre la puissance prédéterminée en superposant un courant d'axe d supplémentaire à un courant d'axe d correspondant à la puissance d'entraînement requise pour entraîner le moteur (2), dans lequel
en outre, lorsque la vitesse de rotation du moteur (2) est égale ou inférieure à une valeur seuil prédéterminée, l'unité de sortie délivre la puissance prédéterminée en superposant le courant d'axe d supplémentaire au courant d'axe d correspondant à la puissance d'entraînement requise pour entraîner le moteur (2) selon un procédé qui fait varier la valeur du courant d'axe d dans le temps,
**caractérisé en ce que**
l'unité de sortie génère le courant d'axe d supplémentaire sur la base de la puissance extraite estimée par l'unité d'estimation de puissance et superpose le courant d'axe d supplémentaire à la puissance d'entraînement requise pour entraîner le moteur (2).

**2.** Entraînement (4) selon la revendication 1, dans lequel

lorsque l'état de fonctionnement du moteur (2) se situe dans une plage où la puissance extraite par l'unité d'extraction (214) dépasse une puissance seuil prédéterminée, la puissance extraite étant calculée sur la base du courant d'entraînement et d'une vitesse de rotation du moteur (2),

**14**

l'unité de détermination détermine qu'il n'est pas nécessaire d'ajuster la valeur du courant d'axe d pour fournir la première puissance, et

l'unité de sortie délivre la puissance prédéterminée sans ajuster un courant d'axe d correspondant à la puissance d'entraînement requise pour entraîner le moteur (2).

3. Entraînement (4) selon la revendication 1, dans lequel

en outre, lorsque la vitesse de rotation du moteur (2) est supérieure à une valeur seuil prédéterminée, l'unité de sortie délivre la puissance prédéterminée en superposant le courant d'axe supplémentaire au courant d'axe d correspondant à la puissance d'entraînement requise pour entraîner le moteur (2) selon un procédé qui ne fait pas varier la valeur du courant d'axe d dans le temps.

FIG. 1

FIG. 2

EP 4 395 158 B1

# FIG. 3

# FIG. 4

# FIG. 5

```
                        START

                          │
                          ▼           S101
              ┌───────────────────────┐
              │  IDENTIFY OPERATING   │
              │   STATE OF MOTOR      │
              └───────────────────────┘
                          │
                          ▼           S102
                  ╱───────────────╲        no
                 ╱ IS D-AXIS CURRENT╲───────────────────────┐
                 ╲ VALUE ADJUSTMENT ╱                        │
                  ╲  NECESSARY?    ╱                         │
                   ╲──────────────╱                          │
                       yes │                                 │
                          ▼           S103                   ▼           S104
       no         ╱───────────────╲           ┌───────────────────────┐
   ┌──────────────╲ IS REGION LOW  ╱           │ SUPPLY POWER WITHOUT  │
   │              ╲ROTATION REGION╱            │   ADJUSTING D-AXIS    │
   │               ╲   (R3)?     ╱             │    CURRENT VALUE      │
   │                ╲───────────╱              └───────────────────────┘
   │                    yes │                              │
   ▼           S106         ▼           S105               │
┌─────────────────────┐ ┌─────────────────────┐           │
│ SUPERIMPOSE D-AXIS  │ │ SUPERIMPOSE D-AXIS  │           │
│ CURRENT USING METHOD│ │ CURRENT USING METHOD│           │
│ THAT DOES NOT VARY  │ │ THAT VARIES D-AXIS  │           │
│ D-AXIS CURRENT OVER │ │ CURRENT OVER TIME   │           │
│ TIME                │ └─────────────────────┘           │
└─────────────────────┘           │                       │
   │                              │                       │
   └──────────────┬───────────────┴───────────────────────┘
                  ▼
               RETURN
```

# FIG. 6

FIG. 7A

FIG. 7B

# FIG. 8

# FIG. 9

FIG. 10

SERVO DRIVER 4

TEMPERATURE SENSOR

VIBRATION SENSOR

PROCESSING UNIT

EP 4 395 158 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001297389 A
- WO 2022186200 A
- US 2022200498 A1